# EUROPEAN PATENT APPLICATION

(11) **EP 2 028 447 A1**
(43) Date of publication of application: **25.02.2009**
(21) Application number: 07745063.3
(22) Date of filing: 12.06.2007
(51) Int. Cl.: G01C 21/36, G08G 1/0969, G09B 29/00, G09B 29/10

(54) **NAVIGATION DEVICE AND NAVIGATION METHOD**

(30) Priority: 12.06.2006 JP 2006162900
(71) Applicant: Panasonic Corporation, Kadoma-shi Osaka 571-8501 (JP)
(72) Inventor: AKITA, Takashi c/o Panasonic Corp. IPROC, IP Development, Chuo-ku, Osaka-shi, Osaka 540-6207 (JP); KUDOH, Takahiro c/o Panasonic Corp. IPROC, IP Development, Chuo-ku, Osaka-shi, Osaka 540-6207 (JP); KINDO, Tsuyoshi c/o Panasonic Corp. IPROC, IP Development, Chuo-ku, Osaka-shi, Osaka 540-6207 (JP)
(74) Representative: Pautex Schneider, Nicole Véronique
(86) International application number: PCT/JP2007/061776
(87) International publication number: WO 2007/145190

(57) **Abstract**

A navigation device and the like capable of preventing a user from falsely recognizing an intersection to take a turn even when another intersection is present near a guidance target intersection. The navigation device that performs route navigation by displaying a guiding symbol superimposed on a photographed image includes: an adjacent intersection detection unit that calculates a distance between a guidance target intersection and an intersection adjacent to the guidance target intersection; and a guidance display control unit that controls guidance details to be displayed. The guidance display control unit sets timing for indicating a path to be taken at the guidance target intersection by using the guiding symbol based on the distance between intersections calculated by the adjacent intersection detection unit.

## Description

### Technical Field

The present invention relates to a navigation device that performs route navigation by using a projected image of a view volume in a traveling direction of a vehicle or an actual scene seen through a windshield.

### Background Art

Navigation devices that perform route searching from a current position of a vehicle to a destination set by a user and perform route navigation for intersections on the route by using accumulated map data have conventionally been popular. Navigation devices of recent years are capable of memorizing more detailed map data owing to enlarged capacity of recording media such as Hard Disk Drive (HDD) and Digital Versatile Disc (DVD), and of expressing a map in a variety of ways, for example, a three-dimensional bird's-eye view display and a realistic driver's view using a three-dimensional CG, pursuing comprehensibility and reality of a guidance display.

Further, a display method has been proposed, which performs route navigation with more accuracy and comprehensibility by obtaining an image in front of a vehicle using image capturing means such as a video camera and, when a user approaches an intersection on a route (hereinafter referred to as "guidance target intersection"), superimposing a guiding symbol (such as an arrow) on a screen on which the guidance display is presented, as path information indicating a path to be taken at the intersection by the vehicle (see, for example, Patent Reference 1). In other proposals, a windshield display or a head-up display is used as a display device, and a guiding symbol is superimposed on an actual scene seen through the windshield display and displayed.
Patent Reference 1: Japanese Unexamined Patent Application Publication No. 7-63572

### Disclosure of Invention

### Problems that Invention is to Solve

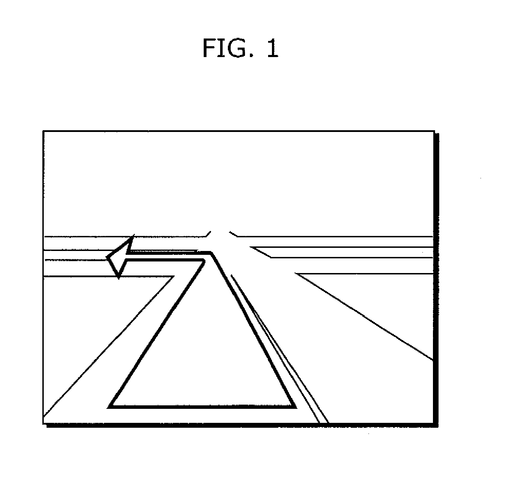

With the conventional techniques disclosed in the above-described Patent Reference 1, however, in the case where an intersection is present adjacent to, and before or beyond the guidance target intersection, it is difficult to see which intersection the guiding symbol indicates as the path to be taken by a vehicle, thus, a user in some cases falsely recognizes an intersection to take a turn. This is particularly noticeable at a point slightly distant from the guidance target intersection (for example, about 150m before the guidance target intersection). This is because, in addition to the fact that adjacent intersections are displayed close to each other on a photographed image, a guiding symbol is misaligned from an actual path due to an error on positioning the vehicle or vibration of the vehicle. More specifically, it is difficult to judge which intersection the guiding symbol indicates, as illustrated in FIG. 1, resulting in a delay in recognizing the intersection to take a turn, and in some cases inconvenience such as taking a turn at a different intersection arises. It is to be noted that the same problem can arise also in the case where a guiding symbol is superimposed on an actual scene seen through the windshield display and displayed.

Therefore, an object of the present invention is to provide a navigation device capable of preventing a user from falsely recognizing an intersection to take a turn even when another intersection exists adjacent to a guidance target intersection.

### Means to Solve the Problems

In order to achieve the above described object, the present invention has a feature as described below. A navigation device according the present invention provides guidance along a route to a destination, the navigation device includes: a map information obtainment unit that obtains map information; a guiding symbol determination unit that generates a guiding symbol for a road corresponding to a guidance route; an adjacent intersection detection unit that calculates a distance between a guidance target intersection and an intersection adjacent to the guidance target intersection by using the obtained map information, the guidance target intersection being an intersection that is targeted by display of the guiding symbol; and a guidance display control unit that determines a timing to start displaying the guiding symbol for the guidance target intersection to be delayed as the calculated distance between the intersections is shorter, and to display the guiding symbol at the determined timing on a windshield or, by superimposing the guiding symbol, on a projected image of a view volume in a traveling direction. Here, the guidance target intersection is an intersection that is targeted by turning guidance in route navigation.

The guidance display control unit, for example, sets a timing to start displaying a guiding symbol for a guidance target intersection in a manner so that the timing delays more as a distance between the intersections is shorter.

Further, the guidance display control unit may set the timing to indicate a path to be taken at the guidance target intersection to the timing when relatively approaching the guidance target intersection in the case where another intersection is present within a predetermined distance, before or beyond the guidance target intersection. For example, the path to be taken at the guidance target intersection starts to be indicated at the point 200m before the guidance target intersection in the case where another intersection is not present within a predetermined distance from the guidance target intersection, and at the point 100m before the guidance target intersection in the case where another intersection is present within the predetermined distance from the guidance target intersection.

The above-described structure makes it possible to indicate the path to be taken at the guidance target intersection with the guiding symbol when sufficiently approaching the guidance target intersection in order to prevent false recognition of a user in the case where an intersection is present adjacent to, and before or beyond the guidance target intersection, and conversely, to indicate the path to be taken at the guidance target intersection with the guiding symbol at an early stage in the case where an intersection is not present adjacent to, and before or beyond the guidance target intersection.

Further, the guidance display control unit may control the timing to indicate a path to be taken at the guidance target intersection depending on whether an intersection that is present within a predetermined distance from the guidance target intersection is located before or beyond the guidance target intersection.

The above-described structure makes it possible to provide, depending on whether an intersection that is present within a predetermined distance from the guidance target intersection is located before or beyond the guidance target intersection, guidance suitable to respective situations.

For example, in the case where the intersection adjacent to the guidance target intersection is present before the guidance target intersection, the timing to indicate the path to be taken at the guidance target intersection is set so as to be closer to the guidance target intersection. This structure is effective because false recognition is more likely to occur when another intersection is present before the guidance target intersection since the intersection is more easily to be recognized by the naked eyes as closer the intersection is present.

Further, the guidance display control unit may set the timing to indicate a path to be taken at the guidance target intersection based on a distance from the nearest forward intersection, among the guidance target intersection and intersections present within a predetermined distance from the guidance target intersection, to the own vehicle position.

The above-described structure makes it possible to indicate a path to be taken at the guidance target intersection with the timing which allows always distinguishing adjacent intersections without fail.

Further, the guidance display control unit may set the timing to indicate a path to be taken at the guidance target intersection based on a degree of importance of a road that crosses the road on which the vehicle drives at an intersection.

The above-described structure makes it possible to allow a user to recognize the intersection to take a turn at an early stage by indicating early the path to be taken at the guidance target intersection in the case where the road that crosses the road on which the vehicle drives is narrow, for example, a narrow street that is less likely to be falsely recognized for the guidance route.

Further, the navigation device may include a map DB in which map information regarding an area for navigation is stored, and the map information obtainment unit may further register the obtained map information in the map DB or update a part of or all of the map information stored in advance in the map DB by using the obtained map information. Further, the guidance display control unit may switch a guidance display from a guidance that uses a map image to a guidance that uses a photographed image with the timing to indicate a path to be taken at the guidance target intersection.

It is to be noted that the present invention can be implemented as a navigation method including, as its steps, the characteristic components included in the above-described navigation device. Further, the present invention can be implemented as a program which causes a compute to execute the steps included in the method described above. It should be understood that such a program can be widely distributed via a recording medium such as a DVD and a transmission medium such as the Internet.

### Effects of the Invention

The present invention, as is apparent from the above descried Means to Solve the Problems, makes it possible to allow a user to recognize an intersection to take a turn as early as possible without falsely recognizing a different intersection, by controlling a timing to indicate a path with a guiding symbol at a guidance target intersection based on a distance from an intersection adjacent to the guidance target intersection.

### Brief Description of Drawings

[FIG. 1] FIG. 1 is a diagram for explaining a conventional problem.
[FIG. 2] FIG. 2 is a block diagram which illustrates a functional structure of a navigation device according to an embodiment of the present invention.
[FIG. 3] FIG. 3(a) is a diagram which illustrates an example of node data in map information stored in a map DB. FIG. 3(b) is a diagram which illustrates an example of interpolated node data in the map information stored in the map DB. FIG. 3(c) is a diagram which illustrates an example of link data in the map information stored in the map DB.
[FIG. 4] FIG. 4 is a diagram which illustrates an example of a network of a road and an intersection which is generated using the node data, the interpolated node data, and the link data stored in the map DB.
[FIG. 5] FIG. 5 is a flowchart which illustrates a flow of a method of setting a shape and a position of a guiding symbol.
[FIG. 6] FIG. 6 is a diagram which illustrates a method of setting a view volume of a camera in a three-dimensional map space.
[FIG. 7] FIG. 7 is a diagram which illustrates a road that is detected by a road detection process.
[FIG. 8] FIG. 8 is a diagram which illustrates an example of an arrangement of a guiding symbol in a three-dimensional map space.
[FIG. 9] FIG. 9 (a) is a diagram which illustrates an example of a shape of a guiding symbol in a turning guidance nondisplay mode along a road on which a vehicle takes a direct advance. FIG. 9(b) is a diagram which illustrates an example of a shape of a guiding symbol for the guidance target intersection in a turning guidance display mode.
[FIG. 10] FIG. 10 is a diagram which illustrates an example of plural intersections including the guidance target intersection according to an embodiment of the present invention.
[FIG. 11] FIG. 11 is a diagram which illustrates an example of a shape of a guiding symbol in the turning guidance nondisplay mode
[FIG. 12] FIG. 12(a) is a diagram which illustrates an example of a photographed image at a point that is distant from the guidance target intersection (in the case of being over a distance D3). FIG. 12(b) is a diagram which illustrates an example of a photographed image on which a turning direction guidance is superimposed and displayed at a point that is close to the guidance target intersection (in the case of being equal to or shorter than a distance D3).
[FIG. 13] FIG. 13 is a flowchart which illustrates an operational flow of a navigation device according to an embodiment of the present invention.
[FIG. 14] FIG. 14(a) is a diagram which illustrates an example of a road arrangement in the case where the nearest forward intersection among the guidance target intersection and adjacent intersections is the adjacent intersection. FIG. 14(b) is a diagram which illustrates an example of a road arrangement in the case where the nearest forward intersection among the guidance target intersection and adjacent intersections is the guidance target intersection.
[FIG. 15] FIG. 15(a) is a diagram which illustrates an example of displaying a guiding symbol in the case where an adjacent intersection is present closer to a vehicle than the guidance target intersection. FIG. 15(b) is a diagram which illustrates an example of displaying a guiding symbol in the case where the guidance target intersection is present closest to a vehicle.
[FIG. 16] FIG. 16 is a diagram which illustrates an example of displaying a guiding symbol in the case where a road with a less importance than an importance of the road on which a vehicle is driving is present closer to the vehicle than a guidance target intersection.
[FIG. 17] FIG. 17 is a diagram which illustrates an example of a guidance display in the case where an arrow is superimposed and displayed on the guidance target intersection.

### Numerical References

1 image obtainment unit
2 position measurement unit
3 map DB
4 operation input unit
5 display unit
6 control unit
7 route searching unit
8 guiding symbol determination unit
9 adjacent intersection detection unit
10 guidance display control unit
100 navigation device

### Best Mode for Carrying Out the Invention

An embodiment according to the present invention will be described below with reference to the drawings. It is to be noted that, although the present invention will be described with the following embodiment and drawings, they are intended not for the purpose of limitation but for exemplification only.

### (Embodiment 1)

A navigation device according to the present invention will be described below with reference to the drawings. It is to be noted that, in each of the drawings, structural elements which have no direct relevance to the present invention are omitted.

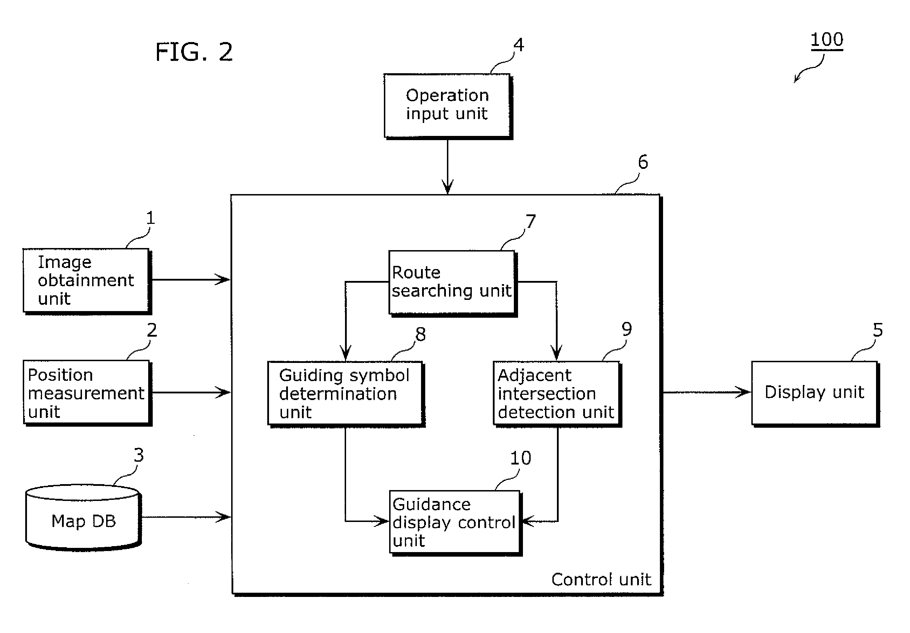

FIG. 2 is a block diagram which illustrates a functional structure of a navigation device 100 according to an embodiment of the present invention. The navigation device 100 is a device that performs route navigation by using photographed images and the like ("image" in this case is assumed to include "moving image", in other words, "video" ) of the front of a vehicle on which the navigation device 100 is mounted (also referred to as "own vehicle"), and includes an image obtainment unit 1, a position measurement unit 2, a map DB 3, an operation input unit 4, a display unit 5, and a control unit 6.

The image obtainment unit 1 obtains a projected image of a view volume in a traveling direction of the own vehicle (by capturing an image with a camera or by generating CG, for example), and also obtains an imaging direction that indicates a direction, from a driver seat, of an image to be obtained. In this case, a photographed image is obtained by using, for example, a digital camera. Further, the image obtainment unit 1 may generate a three-dimensional map image which is an image of a view volume in a traveling direction of the own vehicle projected based on three-dimensional map information and the like.

The position measurement unit 2 is a position measurement sensor or a position measurement system represented by a Global Positioning System (GPS), a gyroscope, and the like and obtains own vehicle position information that represents a position (for example, latitude, longitude, and altitude) of the own vehicle.

The map DB 3 is a data base that is provided with, for example, HDD and DVD, and stores map information such as three-dimensional map data regarding roads and intersections in an area (for example, all over Japan) to be the target of route navigation (navigation). It is to be noted that the map DB 3 further includes a map information obtainment unit that includes a communication tool (for example, a communication function of a mobile phone) (each of which is not illustrated) and is capable of obtaining necessary map information by downloading map information from a server in a website on a network such as the Internet or by reading a DVD in which map information is stored in advance. Further, the map DB 3 is capable of recording the obtained map information on a HDD and the like and updating, by using the obtained map information, a part of or all of the map information stored in advance in the HDD and the like.

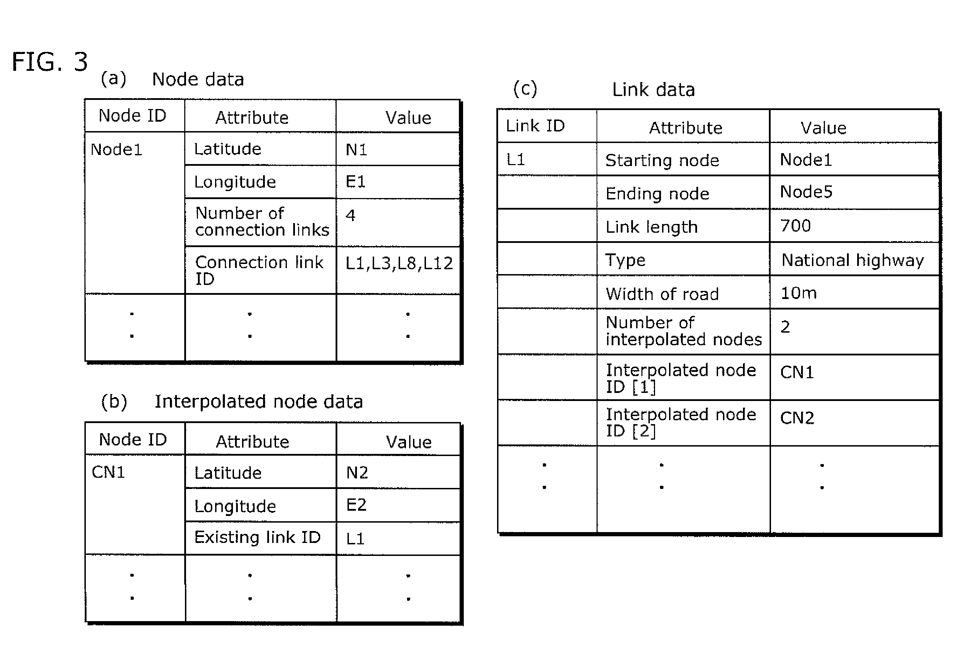

FIG. 3 (a) to (c) is a diagram which illustrates an example, among map information stored in the map DB 3, of data related to the present embodiment. Data stored in the map DB 3 includes node data indicated by FIG. 3(a), interpolated node data indicated by FIG. 3(b), and link data indicated by FIG. 3(c).

The node data of FIG. 3(a) is data related to a point at which a road branches off, for example, an intersection or a junction, and includes attributes such as a latitude, a longitude, the number of links to be connected to the node (the number of connection links) and ID of each of the links (connection link ID) and a value of each of the attributes. The interpolated node data of FIG. 3(b) is data indicating a bending point that exists on a link described below and represents a shape of the link such as a link that is not in a straight line. The interpolated node data includes, for each node ID, attributes such as a latitude, a longitude, a link ID in which the own vehicle exists, and the like, and a value of each of the attributes. The link data of FIG. 3(c) is data indicating a road that connects two nodes and includes, for each link ID, attributes such as a starting node that is an edge of the link, an ending node that is an ending-point of the link, a length of the link (link length: an unit includes meter and kilometer), the number of interpolated nodes described above, a type of the road, a width of the road, and an interpolated node ID, and a value of each of the attributes.

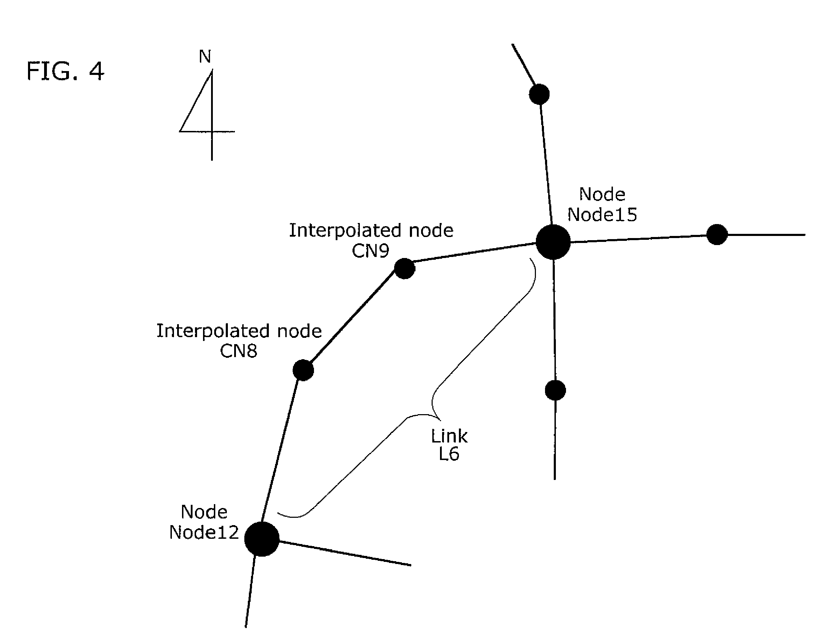

FIG. 4 illustrates an example of a network of roads and intersections indicated by data as illustrated in FIG. 3 as described above. FIG. 4 illustrates nodes (a Node 12 and a Node 15), each of which is connected to at least three links (for example, a link L6) (in other words, connected to other nodes), and an interpolated node (for example, an interpolated node CN8 and an interpolated node CN9) that influences the shape of a link existing on the link. It is to be noted that the interpolated node does not necessarily exist in the case where the link is a straight road.

The operation input unit 4 is an input unit which includes, for example, a remote control, a touch panel, and a microphone for inputting audio, and accepts an instruction to the navigation device 100 (for example, information regarding a destination) from a user.

The display unit 5 is a display device such as a liquid-crystal display, a windshield display, and a head-up display. It is to be noted that, in the case where the display unit 5 is the windshield display or the head-up display, a photographed image or a three-dimensional map image does not need to be displayed on the display. This is because an actual scene can be observed through the windshield. Further, since an eye movement of a driver can be reduced, it is possible to present a safer driving environment.

The control unit 6 is a Central Processing Unit (CPU) provided with, for example, a RAM or a ROM (for storing a control program and the like), and includes a route searching unit 7, a guiding symbol determination unit 8, an adjacent intersection detection unit 9, and a guidance display control unit 10.

The route searching unit 7 searches a route to a destination by referring to information regarding the destination inputted through the operation input unit 4, own vehicle position information obtained by the position measurement unit 2, and map information stored in the map DB 3.

The guiding symbol determination unit 8, in order to superimpose and display a guiding symbol that indicates, on a photographed image obtained by the image obtainment unit 1, a path to be taken by a vehicle, determines a shape and a position of the guiding symbol to be superimposed on the photographed image based on the route which has been searched by the route searching unit 7 and three-dimensional map data stored in the map DB 3 (for example, node data, interpolated node data, and link data) and the like.

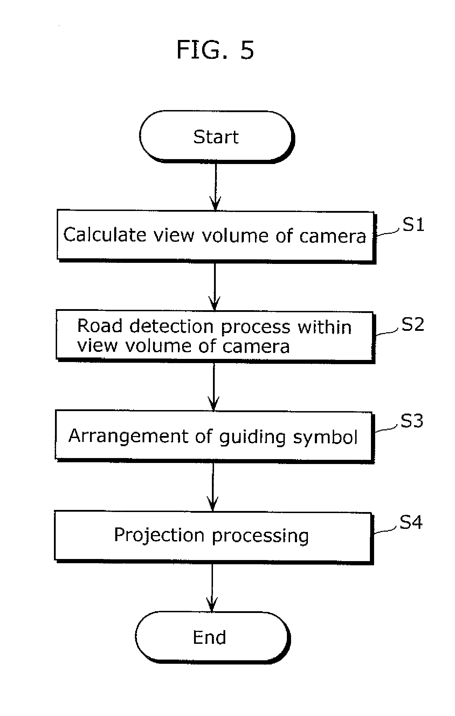

Next, a method of setting a shape and a position of a guiding symbol by the guiding symbol determination unit 8 will be describe with reference to a flowchart illustrated in FIG. 5.

First, the guiding symbol determination unit 8 obtains a view volume of a camera in a three-dimensional map space based on three-dimensional map data stored in the map DB 3, an imaging direction specified by the image obtainment unit 1, a camera position that is a parameter to determine an imaging area, a camera angle (a horizontal angle, an elevation angle), a focal distance, and an image size (S1). It is to be noted that the three-dimensional map is a map that shows a status of a position specified with position information using a latitude, a longitude, and an altitude.

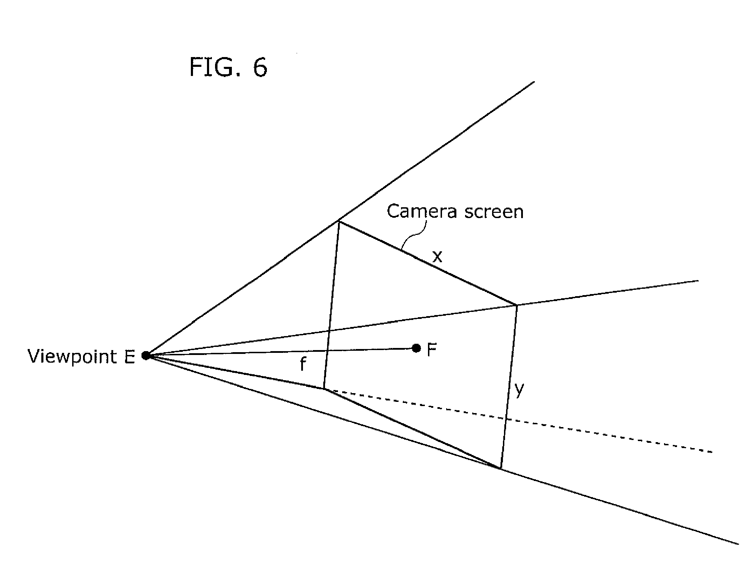

Here, a method of setting a view volume of a camera (S1) will be described with reference to FIG. 6.

First, in the three-dimensional map space, a point (a point F) which is away, by a focal distance f, from a camera position E (viewpoint) in a camera angle direction is obtained, and a plane (a camera screen) in which x is an horizontal axis and y is a vertical axis is set so as to be perpendicular to a vector that links the viewpoint E and the point F, the plane having a size corresponding to an image size. Next, a three-dimensional space having a shape of square pyramid, made by half lines connecting the viewpoint E and points of four corners of the camera screen is obtained. The three-dimensional space, although it extends infinitely in theory, is terminated where a certain distance away from the viewpoint E so as to be determined as the view volume.

It is to be noted that a two-dimensional map in which altitude information is removed from a three-dimensional map may be used in place of the three-dimensional map to obtain a view volume of a camera in a two-dimensional map space. Further, the parameter that specifies an imaging direction and an imaging area is not limited to the above, but other parameters such as an angle of view may be used for conversion as long as the parameter specifies an imaging direction and an imaging area.

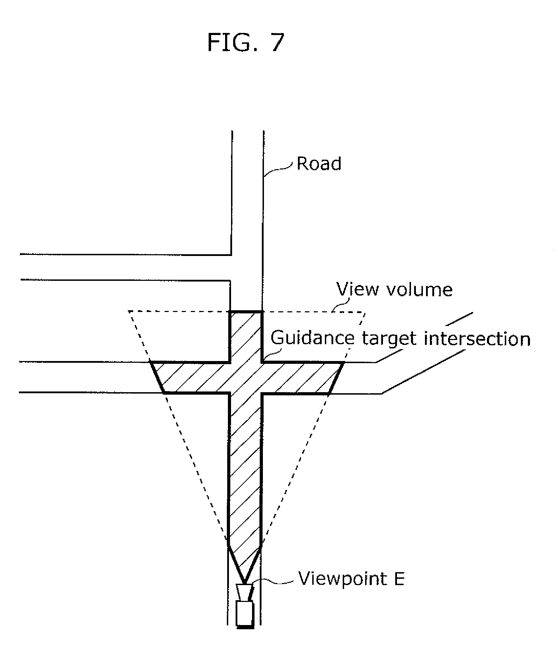

Next, the guiding symbol determination unit 8 performs a road detection process in which, in the three-dimensional map space, a road within the view volume of the camera and a position of the road are detected (S2). In the road detection process, an overlap of the view volume of the camera and a road (in other words, an area that is seen as a road) is obtained in the three-dimensional map space. FIG. 7 illustrates a road that is detected in the road detection process. It is to be noted that FIG. 7 is a diagram of which the three-dimensional map space and a view volume of the camera are seen from an upward direction. In the road detection process, a shape and a width of a road adjacent to the own vehicle are extracted based on the above-described node data, interpolated node data, and link data. Then, as illustrated in FIG. 7, the road enclosed by the view volume (a portion indicated by diagonal lines) is detected as the road that exists within the view volume of a camera.

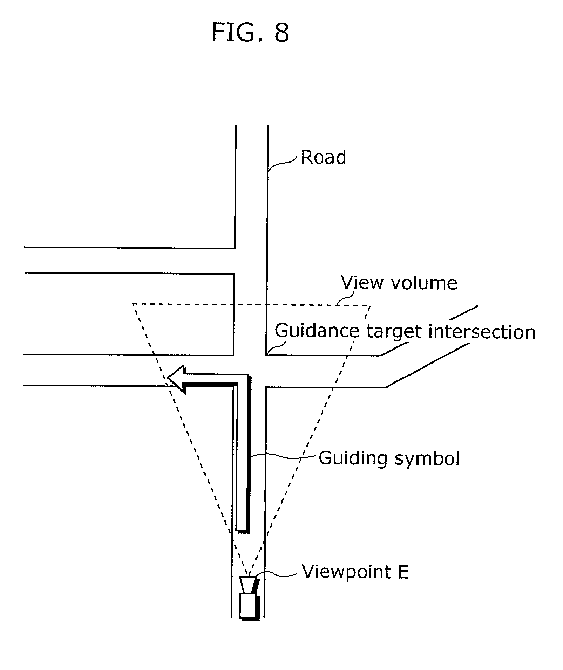

Further, the guiding symbol determination unit 8, in the three-dimensional map space, arranges a guiding symbol at a position on, among roads detected in the road detection process, a road corresponding to the guidance route searched by the route searching unit 7 (S3). FIG. 8 illustrates an example of the case where a guiding symbol is arranged. It is to be noted that the shape of the guiding symbol is not limited to an arrow as illustrated in FIG. 8, but, for example, a polygonal line that has no arrow of a triangle may be used.

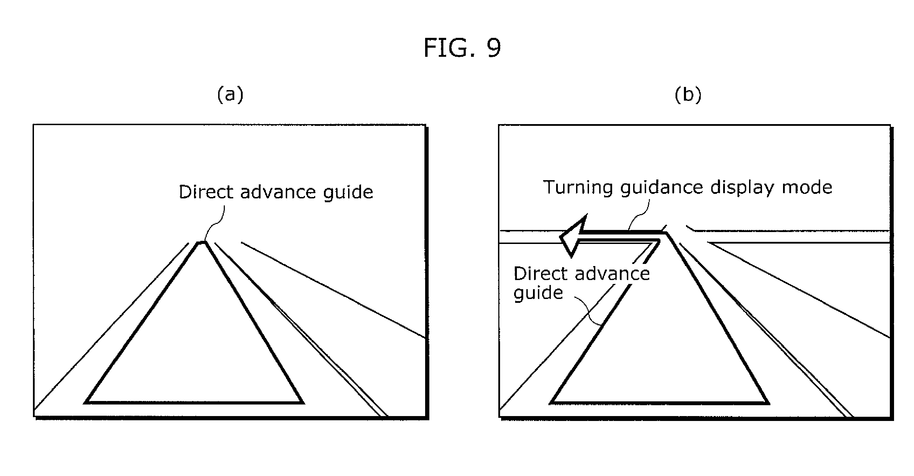

Next, the guiding symbol determination unit 8 performs projection transformation on the guiding symbol with the camera screen illustrated in FIG. 6 being a projection plane (projection processing: S4). In the projection processing (S4), since the projection plane on which the guiding symbol is projected corresponds to the camera screen of the image obtainment unit 1, the guiding symbol is superimposed and displayed on the road (corresponding to a guidance route) shown on the photographed image as illustrated in FIG. 9. It is to be noted that, in the case where the display unit 5 is the windshield display or the head-up display, projection transformation may be performed with the view volume of a camera being the view volume of a driver, and with a projection plane on which the guiding symbol is projected being the windshield.

It is to be noted that the shape of a guiding symbol is set, by the guidance display control unit 10 as described below, so as to correspond to either a mode that displays only a guiding symbol along a road on which a vehicle takes a direct advance (direct advance guide) as illustrated in FIG. 9(a) (turning guidance nondisplay mode) or a mode that displays a guiding symbol that indicates a path to be taken at the guidance target intersection (turning direction guide) in addition to the direct advance guide as illustrated in FIG. 9(b)(turning guidance display mode).

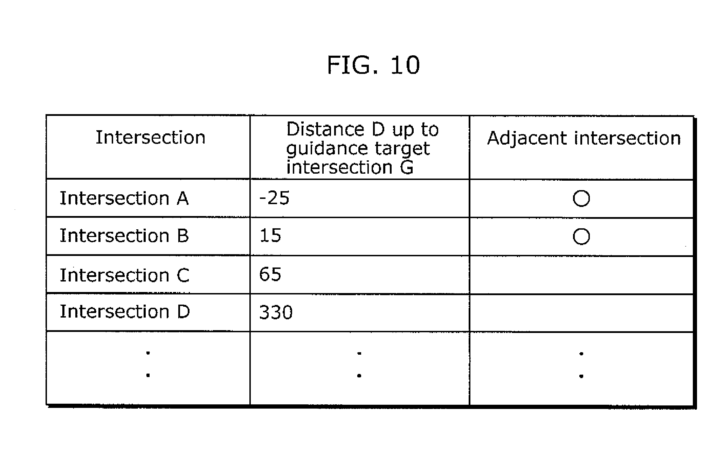

The adjacent intersection detection unit 9 detects an intersection that is present adjacent to, and before or beyond the guidance target intersection (adjacent intersection). More specifically, an intersection that exists within a predetermined distance D1 from the guidance target intersection is detected among intersections on the road on which the vehicle is driving, by referring to the node data of the map DB 3. It is to be noted that the predetermined distance D1 is, for example, 50m. Here, description will be made, as illustrated in FIG. 10, by assuming the case where an intersection A and an intersection B are detected as intersections adjacent to the guidance target intersection G. It is to be noted that, in FIG. 10, a negative value of the distance D indicates that the intersection is present between an own vehicle position and the guidance target intersection (in other words, the intersection exists before the guidance target intersection) and a positive value indicates that the guidance target intersection is present between the own vehicle position and the intersection (in other words, the intersection exists beyond the guidance target intersection). In FIG. 10, "o" in the column of an adjacent intersection indicates that the intersection is judged as the adjacent intersection.

The guidance display control unit 10 sets a guidance mode as either one of the turning guidance nondisplay mode and the turning guidance display mode by referring to the own vehicle position information obtained by the position measurement unit 2, the guidance route searched for by the route searching unit 7, and adjacent intersection information detected by the adjacent intersection detection unit 9.

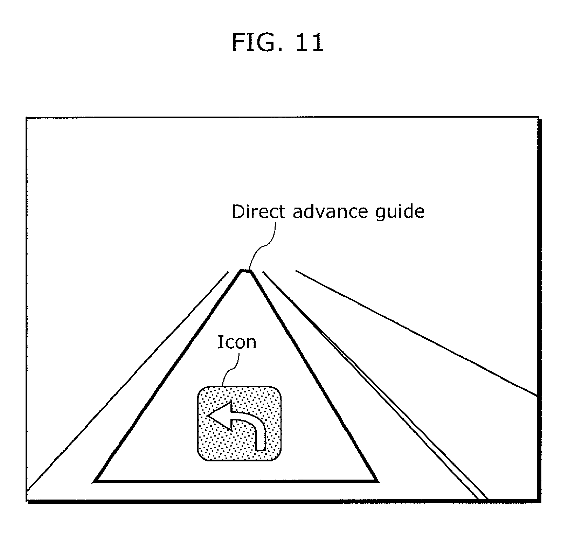

More specifically, the guidance display control unit 10 calculates a distance to the guidance target intersection that the own vehicle passes next. Then, in the case where the distance between the own vehicle position and the guidance target intersection is greater than a predetermined distance D2 (for example, 200m), the guidance mode is set as the turning guidance nondisplay mode which does not display the turning direction guide since it is difficult to see which intersection is indicated by the displayed turning direction guide. Here, the distance D2 is set as a greater value than the above-described distance D1 (50m). It is to be noted that, since the guiding symbol of the turning guidance nondisplay mode does not have an arrow-head, an icon indicating a direction to take a turn may be displayed supplementarily in the guiding symbol as illustrated in FIG. 11 so that the direction to take a turn at the next guidance target intersection is presented to a user.

Further, in the case where the distance between the own vehicle position and the guidance target intersection is equal to or shorter than the distance D2, the adjacent intersection information detected by the adjacent intersection detection unit 9 is referred to. In the case where no adjacent intersection is present around the guidance target intersection, the guidance mode is set as the turning guidance display mode which displays the turning direction guide since it is less likely for a user to falsely recognize a different intersection for the intersection indicated by the displayed turning direction guide.

On the other hand, in the case where an adjacent intersection is present around the guidance target intersection, it is difficult to see which intersection is indicated by the displayed turning direction guide before approaching a point close to the guidance target intersection since adjacent intersections including the guidance target intersection are viewed as close to each other in a photographed image as well. For that reason, in the case where the distance between the own vehicle position and the guidance target intersection is greater than a predetermined distance D3 (D3 is assumed to be a value between D1 and D2 and to be, for example, 100m.), the guidance mode is set as the turning guidance nondisplay mode which does not display the turning direction guide, and when the distance between the own vehicle position and the guidance target intersection becomes equal to or shorter than the distance D3, the guidance mode is set as the turning guidance display mode.

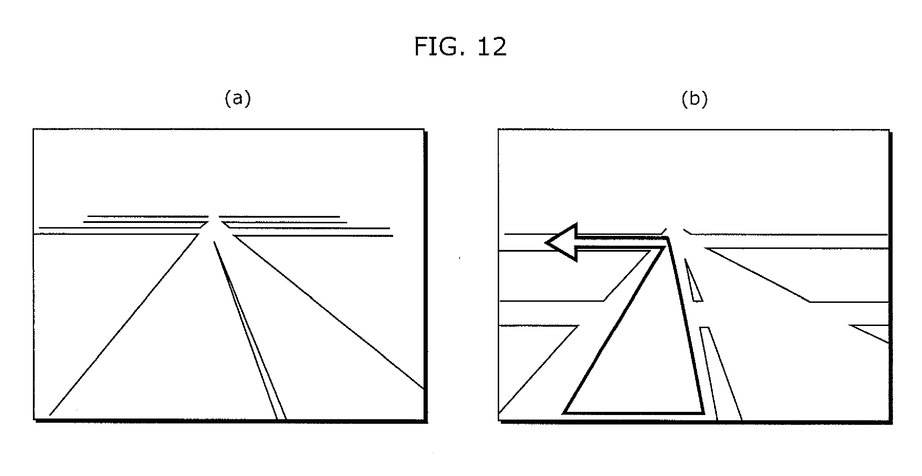

FIG 12(a) and (b) is a diagram for explaining that a display mode of a photographed image varies depending on the distance from the own vehicle position to the guidance target intersection.

FIG. 12(a) is a diagram which illustrates an example of a photographed image at a point that is distant from the guidance target intersection (in the case of being over the distance D3). FIG. 12(b) is a diagram which illustrates an example of a photographed image on which turning direction guidance is superimposed and displayed at a point that is close to the guidance target intersection (the case of being equal to or shorter than the distance D3).

As illustrated in FIG. 12(a) and (b), since adjacent intersections are viewed as being close to each other in a photographed image as well at a point distant from the guidance target intersection, it is difficult to perform effective guidance by displaying the turning direction guide. On the other hand, since the adjacent intersections are displayed at positions away from each other on the photographed image when coming to close to the guidance target intersection, it is possible to perform effective guidance by displaying the turning direction guide. In this case, therefore, false recognition is less likely to occur even when the guiding symbol is misaligned from an actual path, so that effective guidance can be performed.

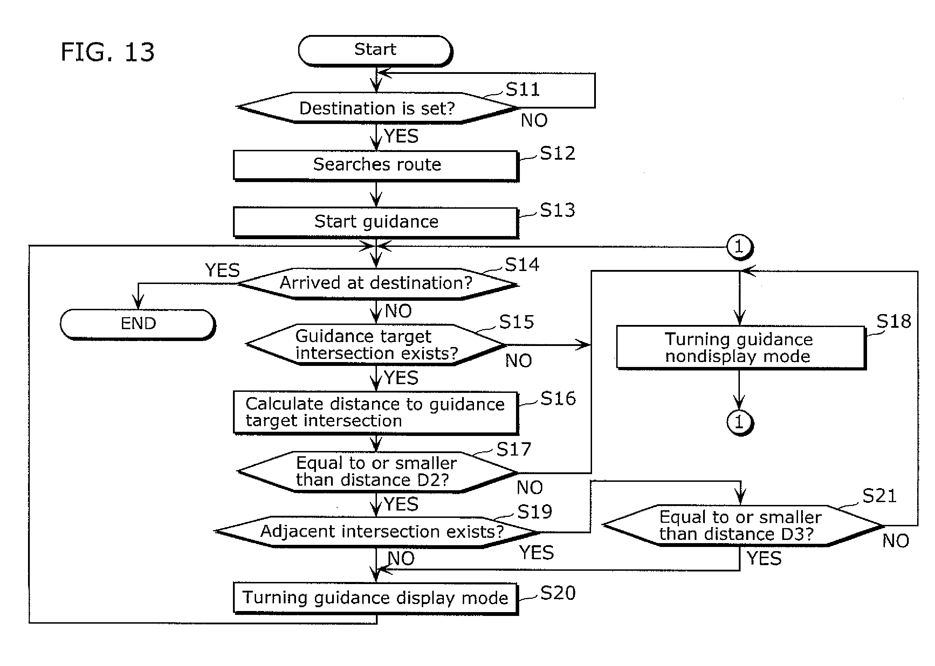

Next, an operation of the navigation device 100 structured as described above will be explained below with reference to the drawings. FIG. 13 is a flowchart which illustrates the operation of the navigation device 100 according to an embodiment of the present invention.

First, when the operation input unit 4 sets a destination for the navigation device 100 (YES in S11), the route searching unit 7 searches a route to the destination based on the own vehicle position information obtained by the position measurement unit 2 (S12), and route navigation is stared (S13).

The control unit 6, when confirming that the own vehicle has not yet arrived at the destination (NO in S14), judges whether or not the guidance target intersection exists on the route from the own vehicle position to the destination (S15). In the case where the guidance target intersection does not exist on the route from the own vehicle position to the destination (NO in S15), guidance is carried out in the turning guidance nondisplay mode (S18).

On the other hand, in the case where the guidance target intersection exists on the route from the own vehicle position to the destination (YES in S15), the guidance display control unit 10 calculates a distance from the own vehicle position to the guidance target intersection that the own vehicle passes next (S16). It is to be note that the guidance display control unit 10 is assumed to periodically (for example, every 10msec) calculate the distance from the own vehicle position to the guidance target intersection.

Next, the guidance display control unit 10 judges whether or not the distance from the own vehicle position to the guidance target intersection is greater than the distance D2 (S17). In the case where the distance from the own vehicle position to the guidance target intersection is greater than the distance D2 (NO in S17), guidance is carried out in the turning guidance nondisplay mode (S18).

On the other hand, in the case where the distance from the own vehicle position to the guidance target intersection is equal to or shorter than the distance D2 (YES in S17), it is judged whether or not an adjacent intersection exists by referring to the adjacent intersection information detected by the adjacent intersection detection unit 9 (S19). In the case where the adjacent intersection does not exist (NO in S19), guidance is carried out in the turning guidance display mode (S20). On the other hand, in the case where the adjacent intersection exists (YES in S19), the distance from the own vehicle position to the guidance target intersection is judged to be greater or shorter as compared to the distance D3 (S21). In the case where the distance from the own vehicle position to the guidance target intersection is greater than the distance D3 (NO in S21), guidance is carried out in the turning guidance nondisplay mode (S18), and in the case of being equal to or shorter than the distance D3, guidance is carried out in the turning guidance display mode (S20).

For example, in the case where the own vehicle drives toward the guidance target intersection G in FIG. 10 described above, guidance is carried out in the turning guidance nondisplay mode at points where the distance from the own vehicle position to the guidance target intersection G is greater than the distance D2 (200m). On the other hand, since other intersections (intersection A and intersection B) exist within the distance D1 (50m) away from the guidance target intersection G at points where the distance from the own vehicle position to the guidance target intersection is equal to or shorter than the distance D2, turning guidance nondisplay mode is maintained at points where the distance to the guidance target intersection is greater than the D3 (100m) and is shifted to the turning guidance display mode when the distance to the guidance target intersection becomes equal to or shorter than the D3.

As described above, in the case where another intersection is present adjacent to, and before or beyond the guidance target intersection, a path to be taken at the guidance target intersection is indicated by using the turning direction guide after approaching the guidance target intersection (after the distance to the guidance target intersection becomes equal to or shorter than D3) in order to prevent false recognition of the user.

On the other hand, in the case where an adjacent intersection is not present around the guidance target intersection that the vehicle approaches, guidance is carried out in the turning guidance nondisplay mode at points where the distance from the own vehicle position to the guidance target intersection is greater than the distance D2, and is shifted to the turning guidance display mode when the distance to the guidance target intersection becomes equal to or shorter than the D2.

As described above, in the case where another intersection is not present adjacent to, and before or beyond the guidance target intersection, the path to be taken at the guidance target intersection is indicated by presenting the turning direction guide at an earlier timing since it is less likely for the user to falsely recognize a different intersection.

As described above, it is possible to allow a user to identify an intersection to take a turn as early as possible without falsely recognizing a different intersection by controlling a timing to start indicating (a timing to shift to the turning guidance display mode), with the guiding symbol, the intersection to take a turn according to the distance from a guidance target intersection to intersections that are present before or beyond the guidance target intersection.

It is to be noted that, although the timing to indicate the path to be taken at the guidance target intersection with the guiding symbol is set depending on whether or not an intersection is present within the predetermined distance D1 from the guidance target intersection in the above-described example, a method of setting the timing to indicate the path at the guidance target intersection is not limited to this. For example, a distance D4 between the guidance target intersection and an intersection closest to the guidance target intersection may be calculated and a timing to indicate the path to be taken at the guidance target intersection may be set to a timing with which the own vehicle reaches a position close to the guidance target intersection as the distance D4 is shorter.

Further, the timing to indicate the path to be taken at the guidance target intersection may be changed depending on whether the intersection adjacent to the guidance target intersection is present before the guidance target intersection or beyond the guidance target intersection. For example, in the case where the intersection adjacent to the guidance target intersection is present before the guidance target intersection, the timing to indicate the path to be taken at the guidance target intersection is set so as to indicate when the vehicle comes closer to the guidance target intersection than in the case where the intersection adjacent to the guidance target intersection is present beyond the guidance target intersection (in other words, to delay the timing to indicate). This is because false recognition is more likely to occur when another intersection is present before the guidance target intersection since the intersection is more easily to be observed as the intersection is present closer to the own vehicle.

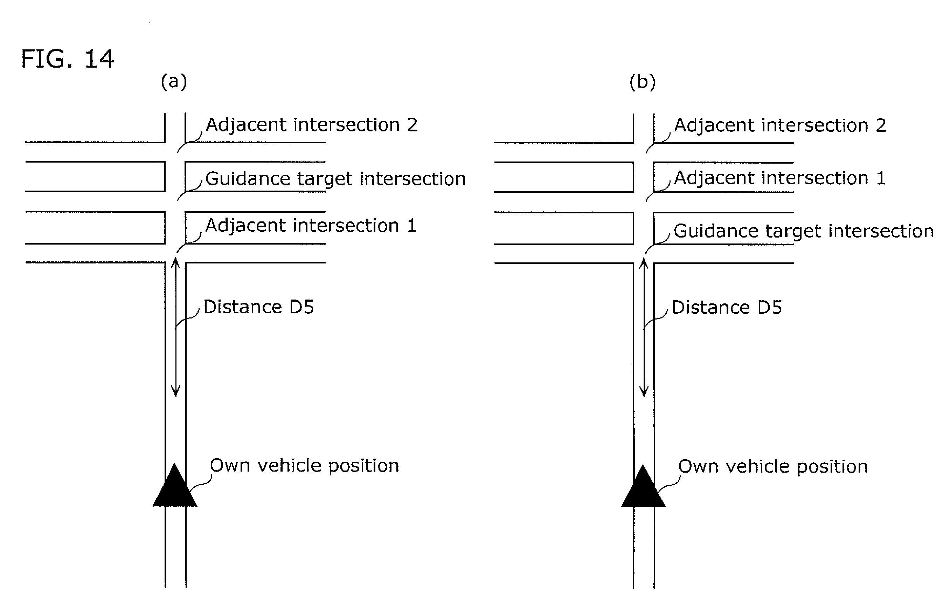

Further, although the timing to indicate the path to be taken at the guidance target intersection is assumed to be set as the distance between the own vehicle position and the guidance target intersection becomes equal to or shorter than the D3 in the above-described example, the timing may be set as a distance between the own vehicle position and the nearest forward intersection among the guidance target intersection and adjacent intersections becomes equal to or shorter than a predetermined distance D5 (for example, 80m) as illustrated in FIG 14 (a) and (b). With this, it is possible to indicate a path to be taken at the guidance target intersection with a timing which allows always distinguishing adjacent intersections without fail.

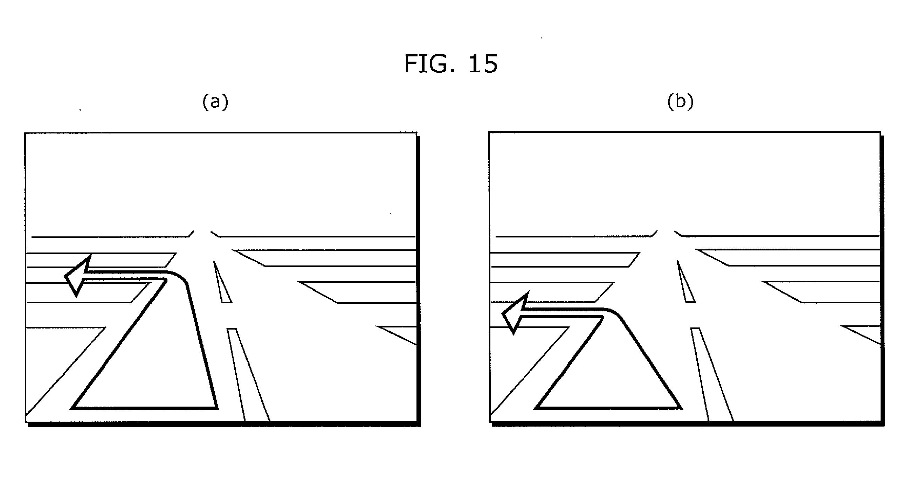

FIG. 15(a) is a diagram which illustrates an example of displaying a guiding symbol in the case where an adjacent intersection 1 is present closer to a vehicle than a guidance target intersection. Further, FIG. 15(b) is a diagram which illustrates an example of displaying a guiding symbol in the case where a guidance target intersection is present nearest forward.

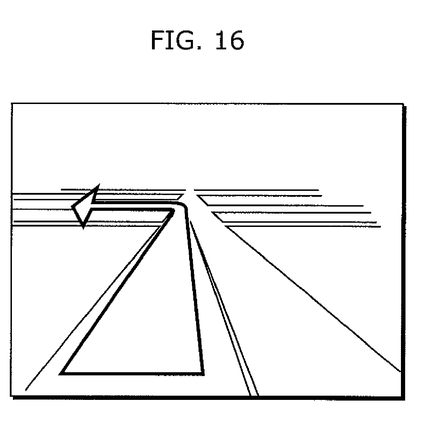

Further, the guidance display control unit 10 may obtain a degree of importance of the road that crosses, at the adjacent intersection, the road on which the vehicle drives, and set the timing to indicate the path to be taken at the guidance target intersection in consideration of the obtained importance. Here, the degree of importance of a road is determined according to a type of the road (a national highway, a prefectural highway, a narrow street, and the like) or a width of the road, for example. With this, it is possible to allow a user to recognize the intersection to take a turn at an early stage by indicating early the path to be taken at the guidance target intersection in the case where the road that crosses, at the adjacent intersection, the road on which the vehicle drives is narrow, for example, a narrow street that is less likely to be falsely recognized for the guidance route (in other words, a road that the user is less likely to take a turn by mistake). FIG. 16 is a diagram which illustrates an example of displaying a guiding symbol in the case where a road with a less importance than an importance of the road on which a vehicle is driving is present closer to the vehicle than a guidance target intersection.

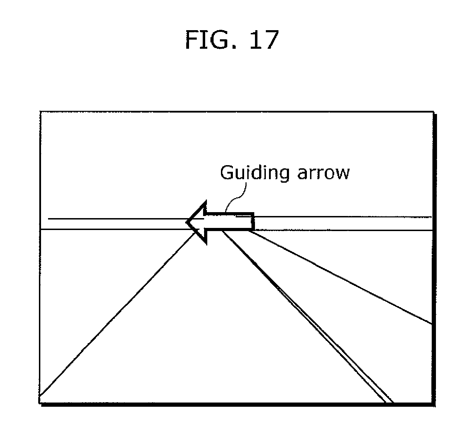

Further, although the path to be taken at the guidance target intersection is indicated by using the guiding symbol superimposed and displayed on the path at the guidance target intersection in the above example, the embodiment is not limited to this, but a guiding arrow may be superimposed and displayed on the guidance target intersection as illustrated in FIG. 17, for example.

Further, although it has been described that the photographed image is used constantly for guidance in the above example, it may be possible to present guidance using the map image until reaching the timing to indicate the path at the guidance target intersection, and to shift from the guidance using the map image to the guidance using a photographed image at the timing to indicate the path at the guidance target intersection.

Further, although it has been described that the guiding symbol is superimposed and displayed on a photographed image obtained using a front camera in the above example, the present invention is effective also in the case where the guiding symbol is superimposed and displayed on a photographed image stored in a recording medium in advance.

It is to be noted that, although the present invention has been described in detail, these descriptions are not for the purpose of limitation but for exemplification only in all respects. It is apparent that the various modifications and conversions can be applied without departing from the scope of the present invention.

It is to be noted that, although the shape of an intersection in front of the own vehicle is arranged such that a road entering an intersection and a road exiting from the intersection cross orthogonally (in other words, in a cross shape) in the embodiment described above, the shape of the intersection is not limited to such a shape, but may be any shapes (for example, Y-shape, X-shape, K-shape, and the like).

### Industrial Applicability

The navigation device of the present invention is useful as a car navigation device mounted in-vehicle. Further, the navigation device of the present invention may be used as the navigation device in a mobile body such as a mobile phone.

## Claims

1. A navigation device which provides guidance along a route to a destination, said navigation device comprising:
a map information obtainment unit configured to obtain map information;
a guiding symbol determination unit configured to generate a guiding symbol for a road corresponding to a guidance route;
an adjacent intersection detection unit configured to calculate a distance between a guidance target intersection and an intersection adjacent to the guidance target intersection by using the obtained map information, the guidance target intersection being an intersection that is targeted by display of the guiding symbol; and
a guidance display control unit configured to determine a timing to start displaying the guiding symbol for the guidance target intersection to be delayed as the calculated distance between the intersections is shorter, and to display the guiding symbol at the determined timing on a windshield or, by superimposing the guiding symbol, on a projected image of a view volume in a traveling direction.

2. The navigation device according to Claim 1,
wherein said adjacent intersection detection unit is further configured to judge that an adjacent intersection is present in the case where the calculated distance is shorter than a predetermined distance, and
said guidance display control unit is further configured to delay the timing to start displaying the guiding symbol for the guidance target intersection in the case where said adjacent intersection detection unit has judged that the adjacent intersection is present.

3. The navigation device according to Claim 1,
wherein said guidance display control unit is further configured to determine the timing to start displaying the guiding symbol based on the distance calculated by said adjacent intersection detection unit and a time it takes for an own vehicle to reach the guidance target intersection.

4. The navigation device according to Claim 1,
wherein said adjacent intersection detection unit is further configured to judge an other intersection as an adjacent intersection in the case where the other intersection is located within a predetermined distance, before or beyond the guidance target intersection, and
said guidance display control unit is further configured to set the timing to start displaying the guiding symbol for the guidance target intersection to the timing with which an own vehicle comes closer to the guidance target intersection in the case where said adjacent intersection detection unit has judged the other intersection as the adjacent intersection.

5. The navigation device according to Claim 4,
wherein said adjacent intersection detection unit is further configured to judge whether the other intersection that has been judged as the adjacent intersection is located beyond the guidance target intersection or before the guidance target intersection, and
said guidance display control unit is further configured to set a later timing to indicate a path to be taken at the guidance target intersection in the case where the other intersection has been judged as being located before the guidance target intersection, than in the case where the other intersection has been judged as being located beyond the guidance target intersection.

6. The navigation device according to Claim 4,
wherein said adjacent intersection detection unit is further configured to identify an intersection that is located closest to the own vehicle among other intersections judged as the adjacent intersection, and
said guidance display control unit is further configured to determine the timing to start displaying the guiding symbol for the guidance target intersection based on a distance between the own vehicle and the intersection that is located closest to the own vehicle among other intersections judged as the adjacent intersection.

7. The navigation device according to Claim 1,
wherein said map information obtainment unit is further configured to obtain information indicating a degree of importance in association with each road, and
said guidance display control unit is further configured to compare the degree of importance of a road on which an own vehicle travels with the degree of importance of a road that crosses at an intersection, and to set the timing to start displaying the guiding symbol for the guidance target intersection to an earlier timing in the case where the degree of importance of the road that crosses the road on which the own vehicle travels at an intersection is lower than the road on which the own vehicle travels.

8. The navigation device according to Claim 7, further comprising
a map DB in which map information regarding an area for navigation is stored,
wherein said map information obtainment unit is further configured to register the obtained map information in said map DB or to update a part of or all of the map information stored in advance in said map DB by using the obtained map information.

9. The navigation device according to Claim 1, further comprising
an image obtainment unit configured to obtain a projected image of a view volume in a traveling direction,
wherein the projected image of the view volume in the traveling direction obtained by said image obtainment unit includes a map image and a photographed image, and
said guidance display control unit is further configured to display the guiding symbol by superimposing the guiding symbol on the photographed image on a timing to start displaying the guiding symbol for the guidance target intersection.

10. A navigation method used for a navigation device that provides route navigation to a destination, said navigation method comprising:
obtaining map information;
generating a guiding symbol for a road that is a guide route;
calculating a distance between a guidance target intersection and an intersection adjacent to the guidance target intersection by using the obtained map information, the guidance target intersection being an intersection that is targeted by display of the guiding symbol; and
determining a timing to start displaying the guiding symbol for the guidance target intersection to be delayed as the calculated distance between the intersections is shorter, and displaying the guiding symbol at the determined timing on a windshield or, by superimposing the guiding symbol, on a projected image of a view volume in a traveling direction.

11. A program used for a navigation device which provides route navigation to a destination, said program causing a computer to execute:
obtaining map information;
generating a guiding symbol for a road that is a guide route;
calculating a distance between a guidance target intersection and an intersection adjacent to the guidance target intersection by using the obtained map information, the guidance target intersection being an intersection that is targeted by display of the guiding symbol; and
determining a timing to start displaying the guiding symbol for the guidance target intersection to be delayed as the calculated distance between the intersections is shorter, and displaying the guiding symbol at the determined timing on a windshield or, by superimposing the guiding symbol, on a projected image of a view volume in a traveling direction.
